# EUROPEAN PATENT APPLICATION

(11) **EP 3 282 252 A1**
(43) Date of publication of application: **14.02.2018**
(21) Application number: 17185138.9
(22) Date of filing: 07.08.2017
(51) Int. Cl.: G01N 27/83, G01N 27/90, B33Y 50/02, B29C 64/393

(54) **METHOD AND SYSTEM FOR INSPECTION OF ADDITIVE MANUFACTURED PARTS**

(30) Priority: 08.08.2016 US 201615230579
(71) Applicant: General Electric Company, Schenectady, NY 12345 (US)
(72) Inventor: DEHGHAN NIRI, Ehsan, Schenectady, NY 12345 (US); ROSE, Curtis Wayne, Schenectady, NY 12345 (US); MCCONNELL, Eric Eicher, Greenville, SC 29615 (US)
(74) Representative: Foster, Christopher Michael

(57) **Abstract**

A method (900) for inspection and assessment of 3D manufactured parts (140) and operational performance of a 3D manufacturing apparatus (100) is provided. The method (900) includes the step (920) of obtaining, in real-time during a 3D printing build process in which at least one structure (140) or part is built by the 3D manufacturing apparatus (100), an electro-magnetic scan of an area of a build platform (112) on which the at least one structure (140) is built. An evaluating step (930) evaluates, by a processor (1202), the electro-magnetic scan. A determining step (950) determines, based on the evaluating step, whether an operational flaw with the 3D manufacturing apparatus (100) has occurred.

## Description

### BACKGROUND OF THE INVENTION

Additive manufacturing is a process by which a three-dimensional structure is built, usually in a series of layers, based on a digital model of the structure. The process is sometimes referred to as three-dimensional (3D) printing or 3D rapid prototyping, and the term "print" is often used even though some examples of the technology rely on sintering or melting/fusing by way of an energy source to form the structure, rather than "printing" in the traditional sense where material is deposited at select locations. Examples of additive manufacturing techniques include powder bed fusion, fused deposition modeling, electron beam melting (EBM), laminated object manufacturing, selective laser sintering (SLS), direct metal laser sintering (DMLS), direct metal laser melting (DMLM), selective laser melting (SLM), and stereolithography, among others. Although 3D printing technology is continually developing, the process to build a structure layer-by-layer is relatively slow, with some builds taking several days to complete.

One of the disadvantages of current additive manufacturing processing relates to quality assurance. There is typically some amount of analysis to determine whether the produced part meets the manufacturing thresholds and design criteria. In some examples, the parts can be evaluated using non-destructive engineering, such as optically scanning, to ensure that the part meets the design thresholds. However, in other cases the part may have to be dissected in order to test whether a certain lot of products or a sampling has satisfied the design limits. This can lead to considerable inefficiency when, for example, it is later determined that a production lot is defective due to a machining or design problem.

There have been some attempts to alleviate the aforementioned problem. In one example, for selective laser sintering, images are obtained by a camera to provide a crude estimation of the production process for the large features. Visually detectable features are utilized to determine if a part fails. However, such a system is unable to determine the root cause analysis of the failure, or to detect subsurface faults. A subsurface fault may occur when the porosity of the part is above a desired level, or when the current surface layer is fused but portions below the surface have not properly fused.

### BRIEF DESCRIPTION OF THE INVENTION

Assurance that a build process is progressing to plan can be important, given the resources, both in time and material, that are expended. In accordance with aspects described herein, a method is provided for inspection and assessment of 3D manufactured parts and operational performance of a 3D manufacturing apparatus is provided. The method includes the step of obtaining, in real-time during a 3D printing build process in which at least one structure or part is built by the 3D manufacturing apparatus, an electro-magnetic scan of an area of a build platform on which the at least one structure is built. An evaluating step evaluates, by a processor, the electro-magnetic scan. A determining step determines, based on the evaluating step, whether an operational flaw with the 3D manufacturing apparatus has occurred.

Additionally, a system for assessment of operational performance of a 3D manufacturing apparatus includes a memory and a processor in communication with the memory. The system is configured to perform the following steps. An obtaining step that obtains with a scanner, in real-time during a 3D printing build process in which at least one structure is built by the 3D manufacturing apparatus, an electro-magnetic scan of an area of a build platform on which the at least one structure is built. The electro-magnetic scan includes at least two of an eddy current scan, an alternating current field measurement (ACFM) scan, a magnetic flux leakage (MFL) scan, and an electromagnetic acoustic transducer (EMAT) scan of the area of the build platform on which the at least one structure is built. A combining step combines the resulting scans to obtain a fused data scan. An evaluating step evaluates, by a processor, the fused data scan. A determining step determines, based on the evaluating step, whether an operational flaw with the 3D manufacturing apparatus has occurred or a physical flaw in the structure has occurred.

Further, a computer program product for assessment of operational performance of a 3D manufacturing apparatus is provided. The computer program product includes a non-transitory computer readable storage medium readable by a processor and storing instructions for execution by the process to perform a method. The method includes an obtaining step that obtains, in real-time during a 3D printing build process in which at least one structure is built by the 3D manufacturing apparatus, an electro-magnetic scan of an area of a build platform on which the at least one structure is built. The electro-magnetic scan includes at least two of an eddy current scan, an alternating current field measurement (ACFM) scan, a magnetic flux leakage (MFL) scan, and an electromagnetic acoustic transducer (EMAT) scan of the area of the build platform on which the at least one structure is built. A combining step combines the resulting scans to obtain a fused data scan. An evaluating step evaluates, by a processor, the fused data scan. A determining step determines, based on the evaluating step, whether an operational flaw with the 3D manufacturing apparatus has occurred or a flaw in the structure has occurred.

Additional features and advantages are realized through the concepts of aspects of the present invention. Other embodiments and aspects of the invention are described in detail herein and are considered a part of the claimed invention.

### BRIEF DESCRIPTION OF THE DRAWINGS

One or more aspects of the present invention are particularly pointed out and distinctly claimed as examples in the claims at the conclusion of the specification. The foregoing and other objects, features, and advantages of the invention are apparent from the following detailed description taken in conjunction with the accompanying drawings in which:
FIG. 1 a cross-sectional view of an additive manufacturing apparatus, in accordance with aspects described herein;
FIG. 2 illustrates a bottom, perspective view of an electro-magnetic scanner of an additive manufacturing apparatus, in accordance with aspects described herein;
FIG. 3 illustrates a bottom, perspective view of a scanner of an additive manufacturing apparatus, in accordance with aspects described herein;
FIG. 4 illustrates a bottom, perspective view of a scanner of an additive manufacturing apparatus, in accordance with aspects described herein;
FIG. 5 illustrates a cross-sectional view of an electro-magnetic scanner of an additive manufacturing apparatus, in accordance with aspects described herein;
FIG. 6 illustrates a top view of a test structure/part;
FIG. 7 illustrates a resistance plot of the test structure/part;
FIG. 8 illustrates an inductive reactance plot of the test structure/part;
FIG. 9 is a flowchart of a data processing and scanning method, in accordance with aspects described herein;
FIG. 10 is a flowchart of the data processing and fusion step shown in FIG. 9, in accordance with aspects described herein;
FIG. 11 illustrates a schematic representation of the control system and the 3D printing apparatus, in accordance with aspects described herein;
FIG. 12 illustrates one example of a data processing system to incorporate and use one or more aspects described herein;
FIG. 13 illustrates one example of a computer program product to incorporate one or more aspects described herein; and
FIG. 14 illustrates a simplified view of a calibration block having known defects.

### DETAILED DESCRIPTION OF THE INVENTION

The phrase "additive manufacturing apparatus" is used interchangeably herein with the phrase "printing apparatus" and term "printer", and the term "print" is used interchangeably herein with the word "build", referring to the action for building a structure by an additive manufacturing apparatus, regardless of the particular additive manufacturing technology being used to form the structure. As used herein, print and printing refer to the various forms of additive manufacturing and include three-dimensional (3D) printing or 3D rapid prototyping, as well as sintering or melting/fusing technologies. Examples of additive manufacturing or printing techniques include powder bed fusion, fused deposition modeling, electron beam melting (EBM), laminated object manufacturing, selective laser sintering (SLS), direct metal laser sintering (DMLS), direct metal laser melting (DMLM), selective laser melting (SLM), and stereolithography, among others.

Assurance that a build process is progressing as planned is important for cost and quality reasons. At the end of a build cycle to build one or more three-dimensional structures, an operator of the additive manufacturing apparatus may find that the parts are defective or unusable because of a failure with the additive manufacturing apparatus during the build cycle. This can be especially problematic when building expensive parts, such as molds for casting structures having complex geometries.

An electro-magnetic scanning system and method are disclosed herein that may be used to monitor the building of layers of one or more objects being built by an additive manufacturing apparatus, and, in one embodiment, to detect operational flaws as they occur, i.e. during the build process rather than afterward, as an example. In a further embodiment, evaluation/analysis of scans acquired during the build process is performed as part of post-processing (and not as part of the real-time acquisition of scanned data). Real-time acquisition as used herein refers to the scans of individual layer(s) of the structure as the structure is being built ("printed"). Real-time analysis refers to evaluation of the acquired scans of the various layers.

Operational flaws may include, as examples, errors with the structure(s), build process, or additive manufacturing apparatus, or indicators that one or more errors are likely to occur with the structure(s), build process, or additive manufacturing apparatus, or lack of fusion, porosity or micro/macro cracks. In some embodiments, action(s) may be taken responsive to observing that an operational flaw has occurred. For instance, remedial actions may be taken so that the flaw can be corrected, the build process stopped, the problem fixed, a new build started, etc.

Provided is an ability to electro-magnetically observe a build process that may take hours or days to complete in order to detect and react to potential operational flaws with the additive manufacturing apparatus and/or errors with one or more printed layers. Also provided is the ability to communicate indications of the operational flaws to operators early in the build process as, or before, they occur, so that a failed build can be stopped prior to its completion. A new build may then be started earlier than it otherwise would have been (i.e. had the failure been discovered only after the failed build process completes). From a manufacturing resources perspective, wasted materials usage and wasted build time are reduced. In addition, as described below, rather than stopping an entire build process, printing of individual parts that are showing flaws or otherwise undesired features can be turned off so as the flaws/features do not cause the build to fail, which could cause errors with all of the structures in the build. By terminating building of individual parts that are becoming problematic, manufacturing yields and machine uptime can be maximized.

Some problems that may be observed during the monitoring of a build process as described herein include, but are not limited to, dimensional errors, distortion, lack of fusion, porosity, micro cracking or macro cracking in the printed structures, malfunctioning of a roller/planarizer or other component of the printing apparatus, poor layer surface finish, delamination of the structures, misplacement, excess, or absence of build material, or any other additive manufacturing errors. In general, the monitoring can monitor for anything that can cause the built part to fail or that can indicate that that additive manufacturing apparatus has failed, is about to fail, or needs maintenance, as examples.

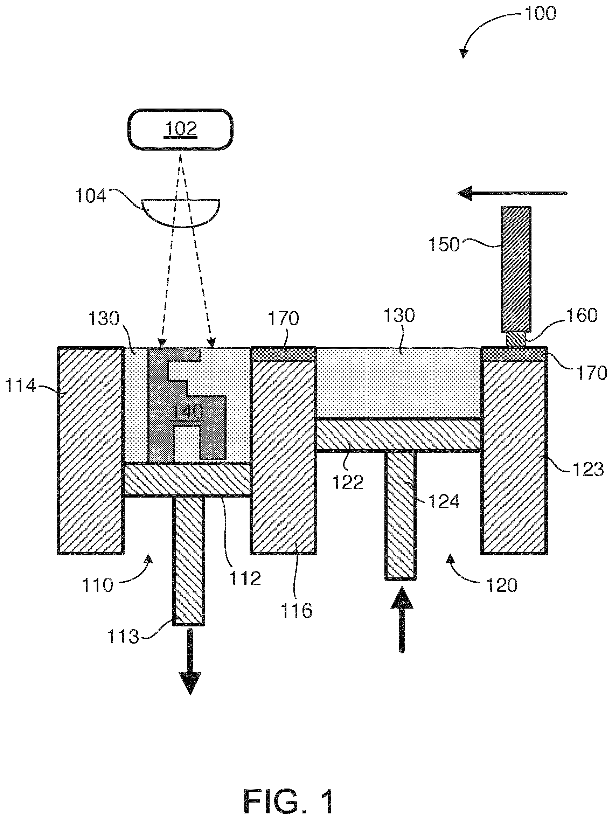

An example additive manufacturing apparatus and associated process in accordance with aspects described herein are presented with reference to FIGS. 1-4, in the context of printed parts. The parts in this example are built out of printed metallic or ferromagnetic material, though other materials are possible.

In one example, the printing apparatus prints the structures in layers. For the first layer, a recoating blade moves across a build platform and powder is pushed onto the build platform in a desired thickness. A light source (or laser) with an appropriate wavelength is then passed over the portion that is to be printed, thereby fusing it in place. After this layer is complete, the build platform lowers a distance that is equal to the layer thickness of the build (this is usually predetermined by the operator of the system), and the new powder stock platform rises by a predetermined amount. Then, the recoating blade moves across the build platform and more powder is pushed onto the build platform. The light source passes over selected regions to fuse the next layer of the part, and this cycle continues until the part is finished.

One potential challenge in the above process is flaws in the printed structure. If there are errors in printing - for instance lack of fusion, porosity, or cracks, as examples - then the printed structure may not function as intended in its downstream application. By way of some examples, lack of fusion or porosity may be the result of insufficient laser power, a laser speed that is too fast, or a recoating powder layer that is too thick. The lack of fusion or porosity may be hard or impossible to see with the naked eye, as these defects may be below the surface of the part layer. However, these defects can cause the parts to fail design specifications, and result in significant losses in production yields and production time (clean up, refixturing, etc.). The above problems and others may lead to manufacturing failures that may be extremely expensive, for instance when they cause defects in expensive parts.

According to aspects described herein, a scanning system is leveraged for monitoring of build quality and machine health during an additive manufacturing process to build a structure, so that the quality of the structure being built and the health of the additive manufacturing apparatus can be assessed. Aspects of the monitoring and analyzing can be performed in real-time, e.g. during the build process. The monitoring includes, in some embodiments, obtaining electro-magnetic scans of the build during the build process (real-time acquisition of images of the build process). Electro-magnetic testing is defined as the process of inducing electric currents or magnetic fields or both in a test object. However, some electromagnetic device can also induce ultrasonic waves in the test object. The electro-magnetic testing or scanning may include, for instance, scans of area(s) of the build platform, including the individual layers of the structure(s) as the layers are being built, scans of one or more additive manufacturing apparatus components, etc., as examples. An assessment of part quality and machine health may then be performed by evaluating the scan data. For instance, the scan data may be evaluated to ascertain characteristics (dimensions, textures, composition, etc.) of the structure(s) being printed and compare these to a 'golden standard', such as a computer-aided design (CAD) specification for the structure. The CAD specification may be a specification that the additive manufacturing apparatus uses in building the structure. The comparison can assess whether the structure is being built consistent with the CAD specification in order to identify possible distortions, deviations, or other flaws.

Since, build quality is dependent on machine and material performance, the evaluation of the scans can additionally identify features in the data that suggest problems with the additive manufacturing apparatus, such as, lack of fusion, porosity or micro/macro cracks or other items that indicate a flaw. Thus, the data can be evaluated to not only detect errors in the structure(s) being built as they are printed, and assign a part 'health' score to the structure(s), but also monitor additive manufacturing apparatus health, indicating when the machine might require maintenance or adjustment and identifying what is needed for that maintenance/adjustment. In some examples, the evaluation is performed in real-time during the build process, though in other examples, the evaluation is performed at a later time.

When the evaluation of the scan data reveals a problem, one or more actions may be taken in response, and the types of actions may vary. For instance, an operator of the additive manufacturing apparatus may be notified of the problem. In some embodiments, an auditory or visual alarm or alert, or an electronic communication (i.e. text or email), is provided to the operator indicating that the flaw has occurred. Additionally or alternatively, adjustments may be made to the additive manufacturing process. The process may be halted for instance. In this regard, some errors may be not recoverable, necessitating shut down of the machine in order to allow for operator intervention. However, in some instances, such as if the error is exhibited only when building a particular part or row of parts, the process is modified but not halted altogether; instead, the process is optionally continued to a next phase, skipping the building of object(s) where the operational flaw(s) is/are exhibited. For instance, a 'bad row' of parts or problematic area of the build platform may be noted and the rest of the build may be completed. Noting the bad row may include notifying the operator of the bad row of parts. In further embodiments, the build process may be continued despite observing occurrence of an operational flaw, and, if the error occurs over a substantial area of the build platform or with a threshold number of parts, then the rest of the build may be halted.

Detection algorithms can be used in the evaluation of the acquired scan data in order to detect the built structure(s), compare them to the CAD model, and identify distortions, deviations or flaws in the build structure(s). Early detection of operational flaws may reduce manufacturing time spent on failed part builds, reduce scrap, reduce raw materials usage, and increase up time on additive manufacturing equipment, as examples.

FIG. 1 depicts one example of an additive manufacturing apparatus, in accordance with aspects described herein. As is seen in FIG. 1, printing apparatus 100 (or a 3D manufacturing apparatus) is a powder bed fusion type of 3D printing device that includes a laser 102 and lens 104. A build section 110 is located adjacent to a dispensing section 120. The build section includes the build platform 112, onto which the structure 140 (e.g., the 3D printed part) is built. The build platform is connected to a shaft or support 113 that lowers the build platform in increments as the structure 140 is built. At the start of 3D printing, the build platform will be at a high position, and as each layer of the structure 140 is formed the build platform will lower accordingly. The build platform 112 or build section 110 is enclosed on the sides by walls 114 and 116 (additional walls may be used, but are not shown).

The dispensing section 120 contains a supply of powder 130 supported by dispensing platform 122 and contained by walls 116 and 123. The dispensing platform 122 is raised up by shaft or support 124. When a new layer of powder is required in build section 110, the dispensing platform 122 will raise up by a predetermined amount so that recoating blade 150 can push the powder 130 from section 120 over to section 110. In this manner, a new layer of powder is spread over part/structure 140 so that the laser 102 may fuse the next layer of the part/structure 140. The recoating blade 150 will then return to its position above wall 123, and be ready for the next layer.

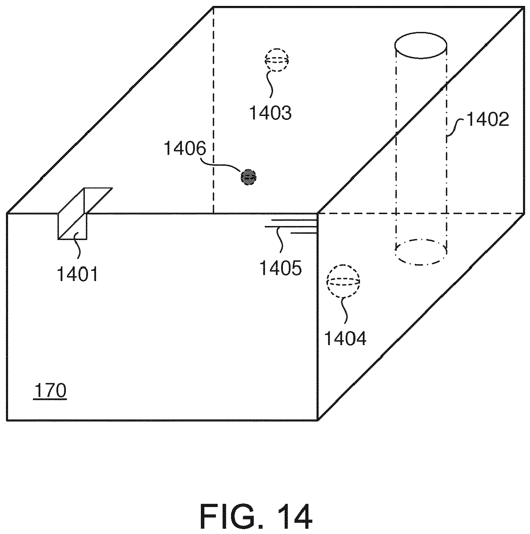

To monitor and assess operational performance of the 3D manufacturing apparatus 100, a scanner 160 is provided to electro-magnetically scan the structure/part 140 each time it passes over the structure/part 140. Electro-magnetic testing is defined as the process of inducing electric currents, magnetic fields or both in a test object, and then observing the resulting electro-magnetic response. In some applications electro-magnetism can be used to induce ultrasonic waves in the test object. The scanner 160 may comprise one or more of an eddy current scanner, an alternating current field measurement (ACFM) scanner, magnetic flux leakage (MFL) scanner or an electromagnetic acoustic transducer (EMAT) scanner, in separate scanning elements or in a combined multi-function scanning array/sensor. Calibration blocks 170 may be located on walls 123 and/or on walls 116, 114 (not shown) to calibrate the scanner 160 prior to a scan operation. The calibration block 170 may have different known artificial defects such as holes, notches, delamination, and voids that represent actual defects that can happen during the printing/build process. Referring to FIG. 14, a calibration block 170 is shown having various known defects. The known artificial defects may include a notch 1401, hole 1402, voids 1403, 1404, area of delamination 1405 and inclusion 1406.

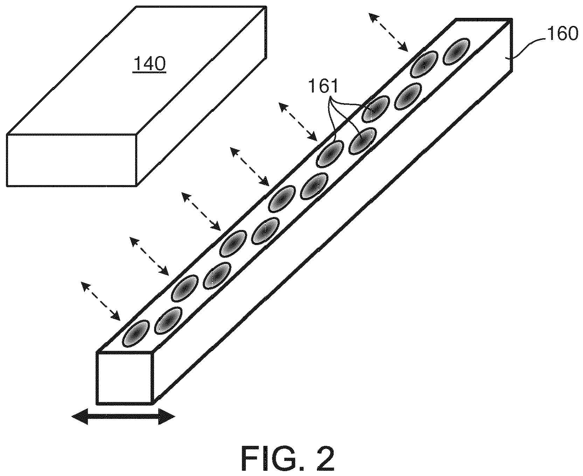

FIG. 2 illustrates a bottom, perspective view of a scanner 160 of an additive manufacturing apparatus, in accordance with aspects described herein. The scanner 160 includes an array of scanning elements 161. In this example, the scanning elements 161 are eddy current transducers in a transitional configuration. Eddy current testing may be used to detect flaws, surface or sub-surface cracks, or porosity in metallic or conductive structures (e.g., part/structure 140). The scanner 160 may be mounted on the bottom of the recoating blade 150.

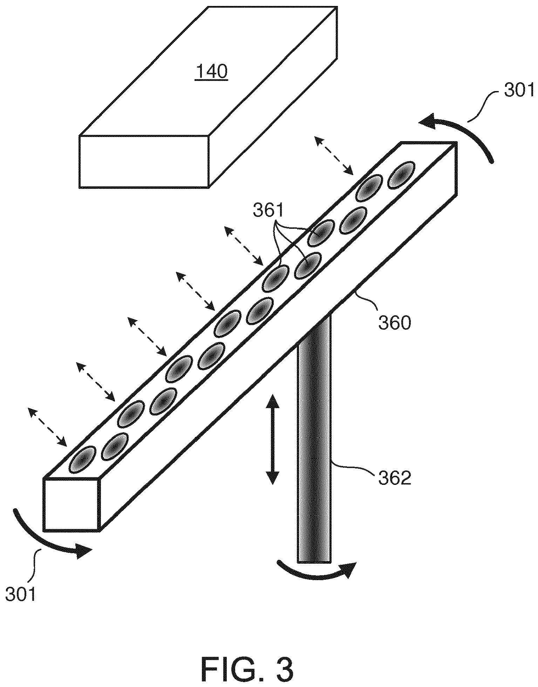

FIG. 3 illustrates a bottom, perspective view of a scanner 360 of an additive manufacturing apparatus, in accordance with aspects described herein. The scanner 360 includes an array of scanning elements 361. In this example, the scanning elements 361 are eddy current transducers in a rotational configuration. The scanner 360 may rotate as indicated by arrows 301 during a scan. In addition, the scanner may be mounted on a rotatable support 362 that raises and lowers with respect to the build platform 112 or structure/part 140. Alternatively, the part 140 can be rotated if shaft 113 is configured to rotate platform 112.

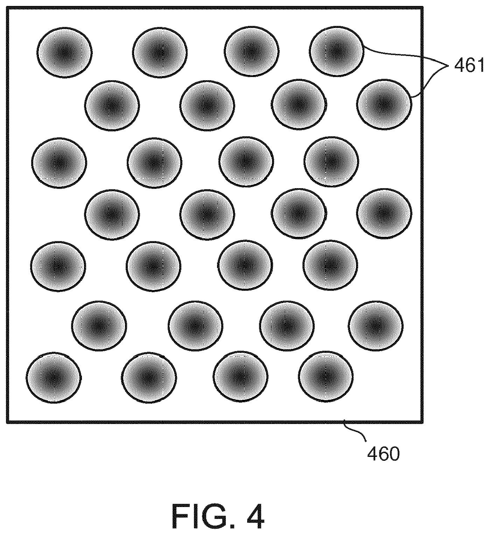

FIG. 4 illustrates a bottom, perspective view of a scanner 460 of an additive manufacturing apparatus, in accordance with aspects described herein. The scanner 460 includes an array of scanning elements 461. In this example, the scanning elements 461 are eddy current transducers in an area configuration. The scanner 460 may be mounted on a support (not shown) that raises and lowers with respect to the build platform 112 or structure/part 140, or the scanner may be mounted on the bottom of the recoating blade 150.

For eddy current scans, measurements of coil resistance and reactance may be acquired and plotted. A calculated phase and amplitude value can also be valuable information in the data processing stage. The calibration blocks 170 can be used before (or after) the redistribution of powder to calibrate the system before inspecting each layer. The data can be used for imaging (scan image), material evaluation and examination of fusion properties, and superficial and sub-surface flaw detection including lack of fusion, porosity and micro/macro cracking. This information can be used in subsequent layer reconstruction to change and control the laser or machine properties to correct the layering process.

Alternating current field measurement (ACFM) and magnetic flux leakage testing (MFL) can be used for layer by layer inspection of the part/structure 140. ACFM probes induce a uniform alternating current in the area on the surface of the part 140 and detects a magnetic field of the resulting current near the layer surface. This current is undisturbed if the area is defect free. A crack redirects the current flow around the ends and faces open to the surface. The ACFM probes measure these magnetic fields and post processing of the data can be used to estimate the flaw size. The lateral and vertical components of the magnetic field are measured and analyzed and can be used in the data processing stage as a feedback to the process control for correction of the next layer. An array of ACFM scanning elements on the recoating blade may be used for imaging each layer and providing the scan of the surface and sub-surface regions of part/structure 140.

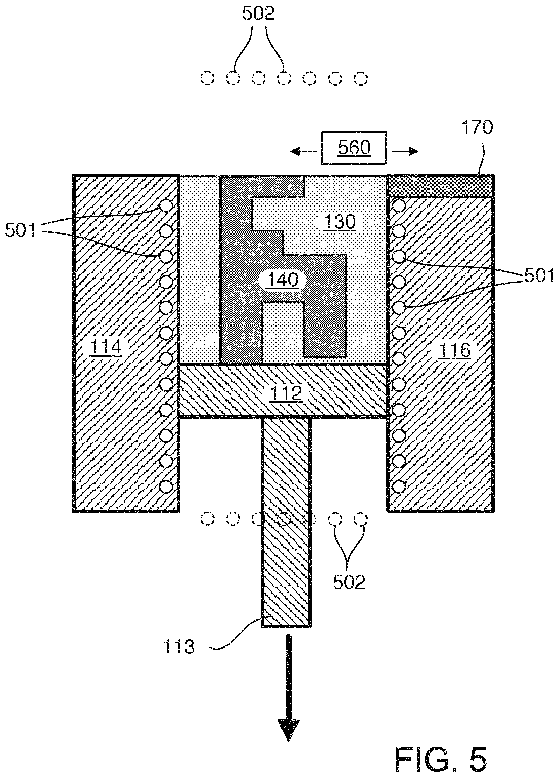

In magnetic flux leakage (MFL) testing, a powerful magnet is used to magnetize the part/structure 140 (if it is ferromagnetic). In order to induce a magnetic field in the part/structure 140 the build chamber 110 can be instrumented by coils 501, 502 in different directions (see Figure 5). At areas where there is lack of fusion or missing metal, the magnetic field "leaks" from the surface. In an MFL scanner, a magnetic detector 560 is placed between the poles of the magnet to detect the leakage field. This detector 560 can be placed in an array on the recoating blade 150. Post processing the data can interpret the chart recording of the leakage field to identify damaged areas and to estimate the depth of metal loss and thus can be used for correcting the flaw in the subsequent layer reconstruction.

An electro-magnetic acoustic transducer (EMAT) is a probe/sensor used for noncontact ultrasound generation and reception using electromagnetic mechanisms. EMAT's do not require contact or couplant, because the ultrasound is directly generated within the material in the part/structure 140 adjacent to the transducer. Due to this couplant-free feature, EMAT is particularly useful for being installed and used in the recoating blade 150 that moves over a hot reconstructed layer. EMAT is an ideal transducer to generate shear horizontal (SH) bulk wave and surface wave modes in metallic and/or ferromagnetic materials. As an in-situ/real-time or in process ultrasonic testing (UT) technique, EMAT can be used for part/structure 140 layer thickness measurement, flaw detection, and material property characterization. The data, like other mentioned electro-magnetic based methods can be used for process control of the layers in part/structure 140. It should be noted that each of the electro-magnetic methods discussed above has advantages and disadvantages in detecting specific flaw types. However, data from multiple scanner/sensor types can be fused together in a processing stage to enhance defect detection and measurement.

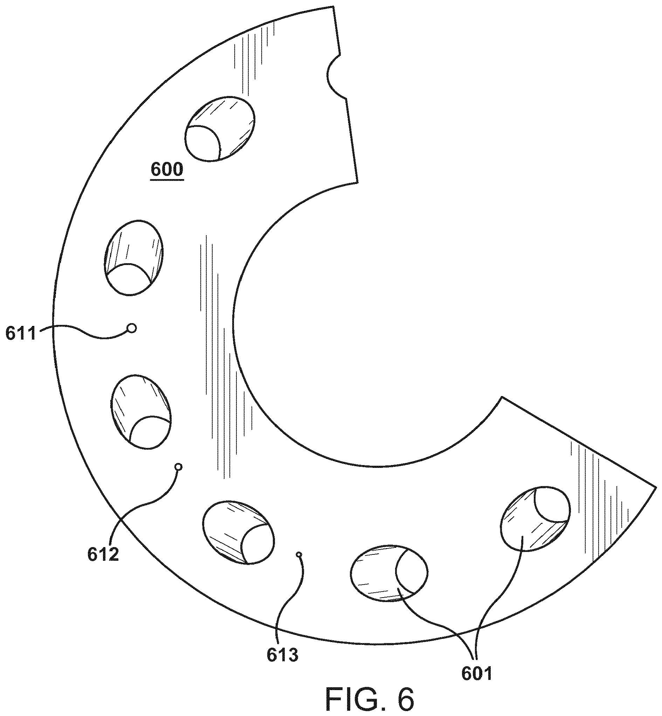

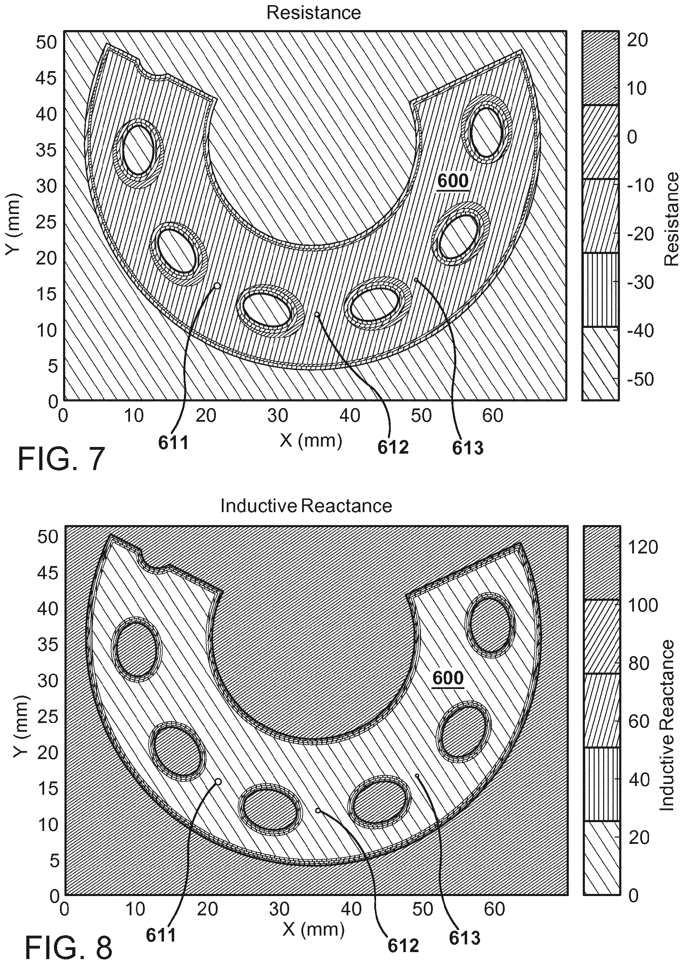

FIG. 6 illustrates a top view of a test structure/part 600. The test structure/part 600 has a number of angled holes 601 that should be in the part according to design specifications. There are also three holes 611, 612, 613 drilled in the part 600 to simulate defects, and these holes have diameters of .023 inches, .020 inches and .014 inches. FIG. 7 illustrates a resistance plot of the test structure/part 600, and the holes 611, 612, 613 are clearly distinguishable and identifiable by the darker and lighter patterned circles. FIG. 8 illustrates an inductive reactance plot of the test structure/part 600, and the holes 611, 612, 613 are clearly distinguishable and identifiable by the lighter patterned circles. In Figs. 7 and 8, a 0.1 inch eddy current coil was used at a 5 MHz excitation frequency. The 1 se scans can be compared to a known good part or layer, and the system can be configured to automatically generate a warning or notification when a flaw is detected.

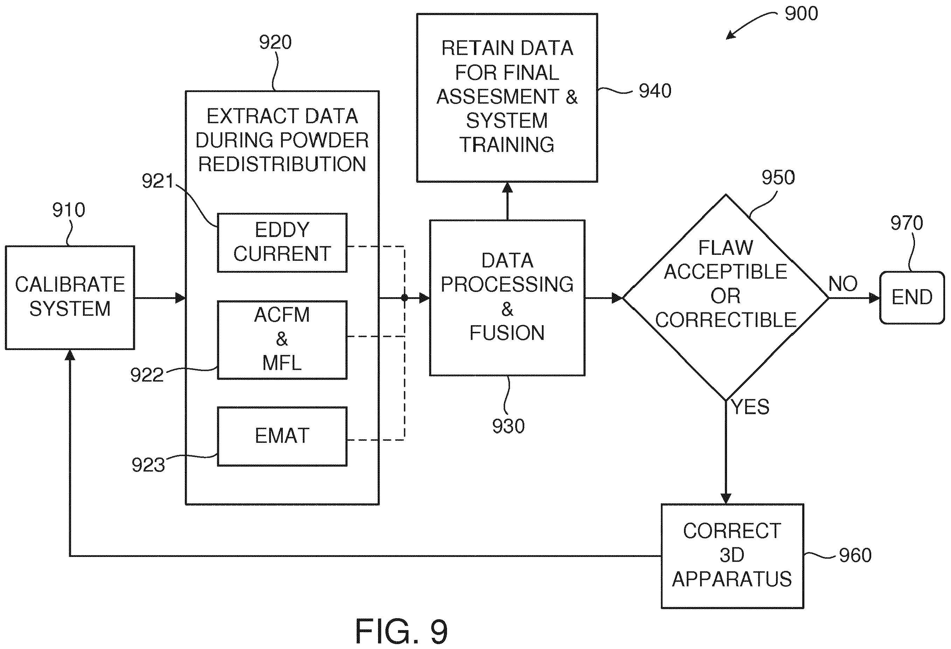

FIG. 9 is a flowchart of the data processing and scanning method 900, in accordance with aspects described herein. The data extracted using each scanning method (i.e., eddy current, ACFM and MFL, EMAT) during the construction of each layer of structure 140 can be used individually and/or together by means of several data fusion methods. This data in general can be used for real time quality control, final quality control and feedback process control to correct the laser or machine properties. In process (i.e., real time) machine control can be used to remove or cure flaws during the 3D build process.

In step 910, the scanner 160 is calibrated. The scanner 160 is placed over calibration block 170 and a scan is initiated. The response is compared to a known good response and response of known artificial flaws in the calibration block in order to detect, evaluate and size the defect. If there is a discrepancy, the scanner (or output thereof) is modified to correct the error. This will yield a very reliable and repeatable scanning process. As one example, the height of the scanner can affect the response thereof, so if the scanner 160 (or recoating blade 150) raised by 0.1 mm, then the scanner could be lowered by that amount to compensate. Calibration blocks 170 are provided to have an accurate and repeatable test for each layer, to permit modification of scanning characteristics, such as distance, frequency and etc. to optimize the sensitivity of the scanner/sensors, and to use known defects with known sizes so that the system can use their data for sizing and defect classification. These known defects can be designed and modified according to the sensitivity and kind of defects needed to be detected and classified. For example, if the critical defect size is a void of 2 mm diameter, a void with 2 mm diameter can be artificially made in the calibration block 170. The system calibrates before scanning to have its response accurately adjusted. Alternatively, 2 mm void and a 2 mm inclusion can be located in the calibration block 170 to use their response for classifying the kind of defect.

In step 920, an electro-magnetic scan is obtained of an area of the build platform 112, and specifically including structure/part 140. This scan can be obtained in real-time during a 3D printing build process in which at least one structure 140 is built by the 3D manufacturing apparatus 100, and is typically performed during powder redistribution for a new part layer. Step 920 may include at least two scans, chosen from an eddy current scan, an AFCM and/or MFL scan and an EMAT scan. The eddy current scan 921 uses an eddy current scanner to scan the area of the build platform 112 on which the structure/part 140 is built. The ACFM and/or MFL scan 922 uses a ACFM and/or MFL scanners to scan the area of the build platform 112 on which the structure/part 140 is built. The EMAT scan 923 uses an EMAT scanner to scan the area of the build platform 112 on which the structure/part 140 is built. One, two, three or all of these scans may be used, combined or fused together in the next step.

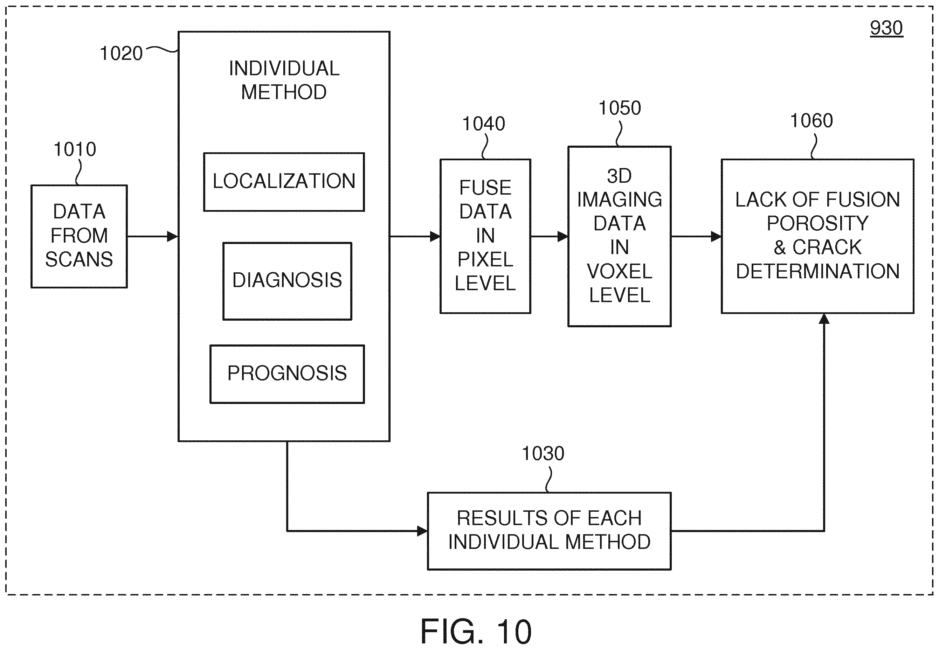

In step 930, the scans from step 920 may be combined (or fused) and the scanned data processed. The data in this step is retained in a memory (step 940) for the final part/structure assessment, as well as for machine learning and system training. For example, the gathered data of the same layer of multiple defect-free parts can be used as an input to a machine learning algorithm such as Artificial Neural Networks (ANNs) to train the algorithm to be used for defect detection and classification of parts for that specific layer. One aspect of the current method is that after detecting the flaw, the method classifies the flaw so that the corrective action or decision can be made accordingly. FIG. 10 is a more detailed flowchart of the data processing and fusion step 930. In step 1010, data from the electromagnetic scans are obtained and input into the individual method step 1020. In step 1020 the data is localized, diagnosed and a prognosis is determined. The data output from step 1020 travels in two paths. In step 1030, the results of each individual method (i.e., eddy current scan, an AFCM and/or MFL scan and an EMAT scan) are input to step 1060, which determines if there is a flaw (e.g., lack of fusion, porosity or a crack). In step 1040, the data is fused in the pixel level, or two dimensionally. The two dimensional data is then used to create a three dimensional, voxel level, image in step 1050. Each two dimensional image is stored and added to the previous scanned layer or layers, and as this process continues a three dimensional image is constructed. In step 1060, the three dimensional image is analyzed to determine if a flaw, such as a lack of fusion, porosity or crack is present. In step 950, a determination is made as to whether the flaw is acceptable or correctible. If the flaw is smaller than a predetermined amount (e.g., less than 0.5 mm), then the build process can continue. If the flaw is correctible, then step 960 is used to correct the flaw. For example, if the flaw was an unfused area, then the laser could be directed to re-target that flawed area. However, if the flaw is neither acceptable nor correctible, then the part is discarded and the build process ends with step 970.

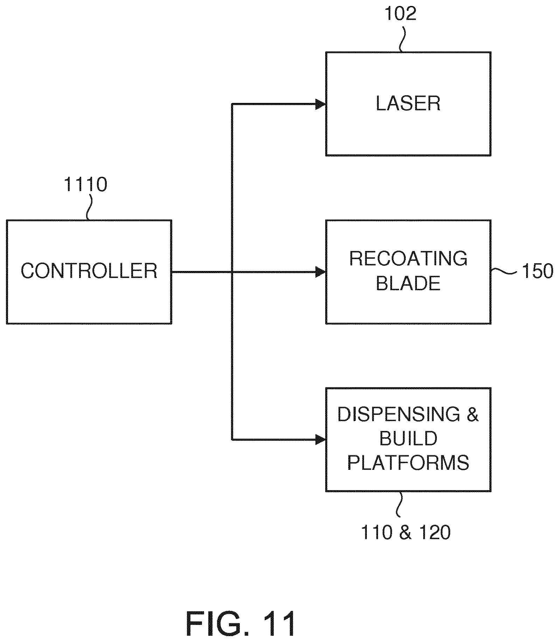

FIG. 11 illustrates a schematic representation of the control system and the 3D printing apparatus, in accordance with aspects described herein. Printing (or 3D manufacturing) apparatus 100 may include a control system including one or more controller(s) 1110, including hardware and/or software for controlling functioning of some or all components of printing apparatus 100. Controller(s) 1110 may control, for instance, operation of laser 102 (including laser power, laser speed, laser spot size, etc.), recoating blade position, speed or height, and dispensing and build platform operation (e.g., amount of height increase/decrease, etc.). In general, many operational characteristics of the apparatus may be controlled due to feedback obtained via scanner 160 and system 1200, for example, laser power, laser speed, powder size, powder material, chamber temperature, laser spot size, or powder depth are a few examples of characteristics that can be modified as desired. In some embodiments, controller(s) 1110 include one or more control data processing systems for controlling the print process and behavior of the other hardware of the printing apparatus. Control algorithms such as Proportional-Integral-Derivative (PID), Linear Quadratic Regulator (LQR), Fuzzy Logic Controller (FLC) and other suitable control algorithm can be used to calculate the multiple output parameters with respect to input data.

The scanner(s) 160 may capture data in real-time during the build process. The data may then be evaluated, in real time, in one example, using one or more algorithms executed as software on a data processing system. The data processing system may be included as part of the apparatus 100, in one example. In other examples, the data processing system is in wired or wireless communication with scanner 160 responsible for acquiring the scan data, where the scanner communicates the data through one or more wired or wireless communication paths to the data processing system. The separate data processing system may be a controller 1110 data processing system described above, or may be a different data processing system dedicated to evaluation of the acquired scan data.

In any case, the data processing system that obtains the scan data may evaluate the data, either separately or by one or more of various techniques for comparison with one or more 3D CAD models, to determine whether the structure(s) are being printed correctly. In a typical build setup, a designer of the structures to be printed may utilize software to build designs for all of the parts to be printed onto the build platform. Software for controlling the additive manufacturing apparatus may then (offline) 'slice' the 3D models of the structure(s) to be printed into layers, with each layer to be printed as a 'pass' of the laser.

As described herein, layers of a build process may be electro-magnetically scanned and the properties and characteristics of the printed materials may be compared to a CAD specification in order to assess the quality of the build and determine whether operational flaw(s) have occurred. The scanning of one or more layers in real time during the additive manufacturing process, and the evaluation of the scan data, which may be in real-time during the build process or may be at a later time, provides online inspection and process monitoring that facilitates assessment of the operational health of the additive manufacturing apparatus.

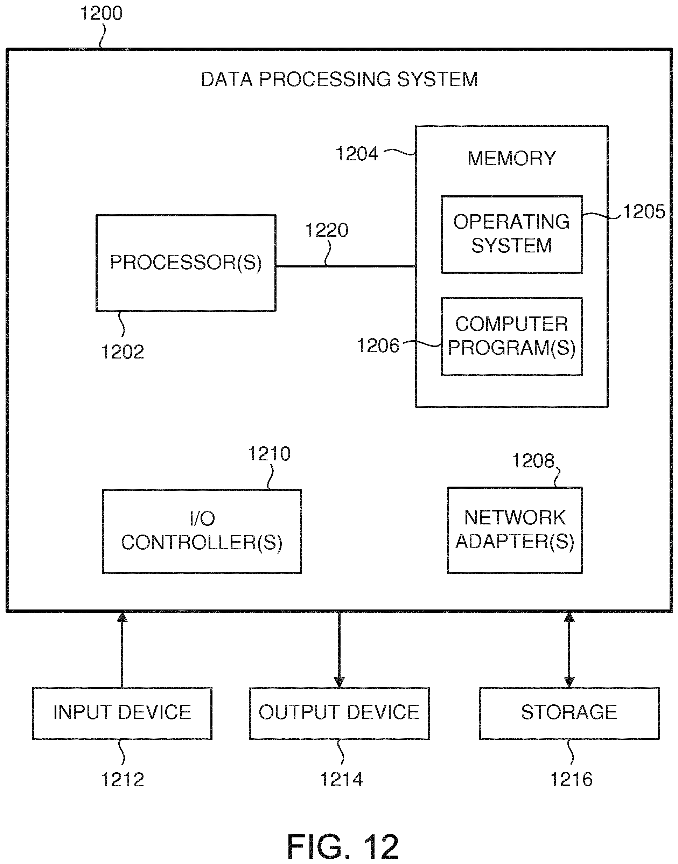

FIG. 12 illustrates one example of a data processing system to incorporate and use one or more aspects described herein. Data processing system 1200 is suitable for storing and/or executing program code, such as program code for performing the processes described above, and includes at least one processor 1202 coupled directly or indirectly to memory 1204 through, a bus 1220. In operation, processor(s) 1202 obtain from memory 1204 one or more instructions for execution by the processors. Memory 1204 may include local memory employed during actual execution of the program code, bulk storage, and cache memories which provide temporary storage of at least some program code in order to reduce the number of times code must be retrieved from bulk storage during program code execution. A nonlimiting list of examples of memory 1204 includes a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Memory 1204 includes an operating system 1205 and one or more computer programs 1206, such as one or more programs for obtaining scan data from a scanner 160, and one or more programs for evaluating the obtained scan data to determine whether operational flaws(s) have occurred with an additive manufacturing apparatus, in accordance with aspects described herein.

Input/output (I/O) devices 1212, 1214 (including but not limited to keyboards, displays, pointing devices, etc.) may be coupled to the system either directly or through I/O controllers 1210. Network adapters 1208 may also be coupled to the system to enable the data processing system to become coupled to other data processing systems through intervening private or public networks. Modems, cable modem and Ethernet cards are just a few of the currently available types of network adapters 1208. In one example, network adapters 1208 and/or input devices 1212 facilitate obtaining scan data of a build process in which a three-dimensional structure is printed.

Data processing system 1200 may be coupled to storage 1216 (e.g., a non-volatile storage area, such as magnetic disk drives, optical disk drives, a tape drive, cloud storage, etc.), having one or more databases. Storage 1216 may include an internal storage device or an attached or network accessible storage. Computer programs in storage 1216 may be loaded into memory 1204 and executed by a processor 1202 in a manner known in the art.

Additionally, data processing system 1200 may be communicatively coupled to the scanner 160 via one or more communication paths, such as a network communication path, serial connection, or similar, for communicating data between data processing system 1200 and the scanner. Communication may include acquisition by the data processing system of the data acquired by the scanner 160.

The data processing system 1200 may include fewer components than illustrated, additional components not illustrated herein, or some combination of the components illustrated and additional components. Data processing system 1200 may include any computing device known in the art, such as a mainframe, server, personal computer, workstation, laptop, handheld computer, tablet, smartphone, telephony device, network appliance, virtualization device, storage controller, etc. In addition, processes described above may be performed by multiple data processing systems 1200, working as part of a clustered computing environment. Data processing system 1200, memory 1204 and/or storage 1216 may include data compression algorithms specifically designed for 3D printing due to the large amount of data needed to be stored for each part.

In some embodiments, aspects of the present invention may take the form of a computer program product embodied in one or more computer readable medium(s). The one or more computer readable medium(s) may have embodied thereon computer readable program code. Various computer readable medium(s) or combinations thereof may be utilized. For instance, the computer readable medium(s) may comprise a computer readable storage medium, examples of which include (but are not limited to) one or more electronic, magnetic, optical, or semiconductor systems, apparatuses, or devices, or any suitable combination of the foregoing. Example computer readable storage medium(s) include, for instance: an electrical connection having one or more wires, a portable computer diskette, a hard disk or mass-storage device, a random access memory (RAM), read-only memory (ROM), and/or erasableprogrammable read-only memory such as EPROM or flash memory, an optical fiber, a portable compact disc read-only memory (CD-ROM), an optical storage device, a magnetic storage device (including a tape device), or any suitable combination of the above. A computer readable storage medium is defined to comprise a tangible medium that can contain or store program code for use by or in connection with an instruction execution system, apparatus, or device, such as a processor. The program code stored in/on the computer readable medium therefore produces an article of manufacture (such as a "computer program product") including program code.

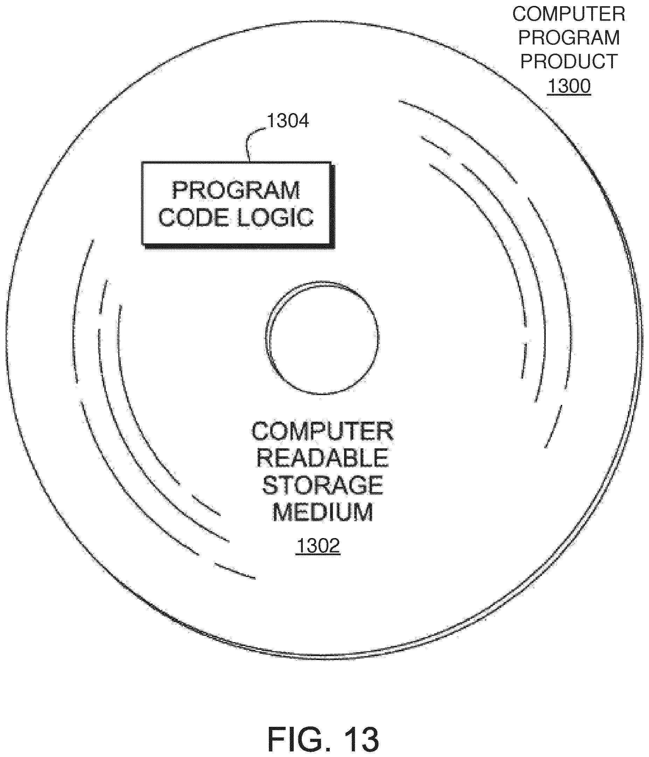

Referring now to FIG. 13, in one example, a computer program product 1300 includes, for instance, one or more computer readable media 1302 to store computer readable program code means or logic 1304 thereon to provide and facilitate one or more aspects of the present invention. Program code contained or stored in/on a computer readable medium 1302 can be obtained and executed by a data processing system (computer, computer system, etc. including a component thereof) and/or other devices to cause the data processing system, component thereof, and/or other device to behave/function in a particular manner. The program code can be transmitted using any appropriate medium, including (but not limited to) wireless, wireline, optical fiber, and/or radio-frequency. Program code for carrying out operations to perform, achieve, or facilitate aspects of the present invention may be written in one or more programming languages. In some embodiments, the programming language(s) include object-oriented and/or procedural programming languages such as C, C++, C#, Java, etc. Program code may execute entirely on the user's computer, entirely remote from the user's computer, or a combination of partly on the user's computer and partly on a remote computer. In some embodiments, a user's computer and a remote computer are in communication via a network such as a local area network (LAN) or a wide area network (WAN), and/or via an external computer (for example, through the Internet using an Internet Service Provider).

In one example, program code includes one or more program instructions obtained for execution by one or more processors. Computer program instructions may be provided to one or more processors of, e.g., one or more data processing system, to produce a machine, such that the program instructions, when executed by the one or more processors, perform, achieve, or facilitate aspects of the present invention, such as actions or functions described in flowcharts and/or block diagrams described herein. Thus, each block, or combinations of blocks, of the flowchart illustrations and/or block diagrams depicted and described herein can be implemented, in some embodiments, by computer program instructions.

The flowcharts and block diagrams depicted and described with reference to the Figures illustrate the architecture, functionality, and operation of possible embodiments of systems, methods and/or computer program products according to aspects of the present invention. These flowchart illustrations and/or block diagrams could, therefore, be of methods, apparatuses (systems), and/or computer program products according to aspects of the present invention.

In some embodiments, as noted above, each block in a flowchart or block diagram may represent a module, segment, or portion of code, which comprises one or more executable instructions for implementing the specified behaviors and/or logical functions of the block. Those having ordinary skill in the art will appreciate that behaviors/functions specified or performed by a block may occur in a different order than depicted and/or described, or may occur simultaneous to, or partially/wholly concurrent with, one or more other blocks. Two blocks shown in succession may, in fact, be executed substantially concurrently, or the blocks may sometimes be executed in the reverse order. Additionally, each block of the block diagrams and/or flowchart illustrations, and combinations of blocks in the block diagrams and/or flowchart illustrations, can be implemented wholly by special-purpose hardware-based systems, or in combination with computer instructions, that perform the behaviors/functions specified by a block or entire block diagram or flowchart.

The method and system of the present invention not only aims at evaluating and modifying the 3D manufacturing apparatus, but is also designed to evaluate each 3D printed part/structure in real time and after the build is completed. For example, the performance of a machine might be very satisfactory, but due to material or other issues some defects occur during the build. Non-destructive testing methods that have to be done to inspect each part in the past can now be eliminated using the inventive method and system, since the part/structure is inspected/assessed as it is constructed. Non-destructive testing of completed 3D parts may be undesirable because, it is very difficult to perform NDT on the parts due to complex geometry, and complex material properties, and computed tomography (CT) is very time consuming, costly and has other disadvantages. In addition, if NDT is performed after the part/structure is built, and then it is decided to scrap the part, then much time has been lost.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has" and "having"), "include" (and any form of include, such as "includes" and "including"), and "contain" (and any form contain, such as "contains" and "containing") are open-ended linking verbs. As a result, a method or device that "comprises", "has", "includes" or "contains" one or more steps or elements possesses those one or more steps or elements, but is not limited to possessing only those one or more steps or elements. Likewise, a step of a method or an element of a device that "comprises", "has", "includes" or "contains" one or more features possesses those one or more features, but is not limited to possessing only those one or more features. Furthermore, a device or structure that is configured in a certain way is configured in at least that way, but may also be configured in ways that are not listed. Additionally, the terms "determine" or "determining" as used herein can include, e.g. in situations where a processor performs the determining, performing one or more calculations or mathematical operations to obtain a result.

The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiment with various modifications as are suited to the particular use contemplated.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112, sixth paragraph, unless and until such claim limitations expressly use the phrase "means for" followed by a statement of function void of further structure. It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the disclosure may include only some of the described embodiments. Accordingly, the invention is not to be seen as limited by the foregoing description, but is only limited by the scope of the appended claims. This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following clauses:
1. A method for inspection and assessment of 3D manufactured parts and operational performance of a 3D manufacturing apparatus, the method comprising:
   obtaining, in real-time during a 3D printing build process in which at least one structure is built by the 3D manufacturing apparatus, an electro-magnetic scan of an area of a build platform on which the at least one structure is built;
   evaluating, by a processor, the electro-magnetic scan; and
   determining, based on the evaluating, whether an operational flaw with the 3D manufacturing apparatus has occurred.
2. The method of clause 1, wherein the obtaining further comprises:
   obtaining a first scan with an eddy current scan of the area of the build platform on which the at least one structure is built;
   obtaining a second scan with at least one of an alternating current field measurement (ACFM) scan and a magnetic flux leakage (MFL) scan of the area of the build platform on which the at least one structure is built;
   obtaining a third scan with an electromagnetic acoustic transducer (EMAT) scan of the area of the build platform on which the at least one structure is built; and
   combining the first scan, the second scan and the third scan to obtain a fused data scan of the area of the build platform on which the at least one structure is built.
3. The method of clause 1, wherein the obtaining further comprises at least two of the following obtaining steps:
   obtaining a first scan with an eddy current scan of the area of the build platform on which the at least one structure is built;
   obtaining a second scan with at least one of an alternating current field measurement (ACFM) scan and a magnetic flux leakage (MFL) scan of the area of the build platform on which the at least one structure is built;
   obtaining a third scan with an electromagnetic acoustic transducer (EMAT) scan of the area of the build platform on which the at least one structure is built; and
   combining at least two of the first scan, the second scan or the third scan to obtain a fused data scan of the area of the build platform on which the at least one structure is built.
4. The method of clause 1, wherein the evaluating comprises performing scan processing on the obtained scan to detect an error indicative of occurrence of the operational flaw with the 3D manufacturing apparatus.
5. The method of clause 1, wherein the operational flaw comprises a malfunction of the 3D manufacturing apparatus indicative that maintenance of the 3D manufacturing apparatus is necessary, or the operational flaw comprises a porosity indication greater than a predetermined threshold, or the operational flaw comprises a lack of fusion, a micro crack or a macro-crack.
6. The method of clause 1, further comprising, responsive to determining that the operational flaw has occurred, performing one or more of the following: providing an alert to a user that the operational flaw has occurred, and halting the build process.
7. The method of clause 1, further comprising, responsive to determining that the operational flaw has occurred, modifying the build process, wherein the modifying disables (i) building at least a portion of a structure which is determined to exhibit the operational flaw, or (ii) building at a location of the build platform at which the operational flaw is determined to be exhibited, or (iii) modifying a 3D manufacturing apparatus operational characteristic.
8. The method of clause 7, wherein the modifying the build process comprises the modifying 3D manufacturing apparatus operational characteristic step, and the operational characteristic comprises at least one of:
   laser power, laser speed, powder size, powder material, chamber temperature, laser spot size, or powder depth.
9. The method of clause 1, wherein the evaluating further comprises comparing one or more physical or electro-physical properties of the at least one structure as it is being built during the build process to a computer-aided design specification describing one or more target properties for the at least one structure, and wherein the determining comprises determining, based on the comparison, whether the structure being built is accurate to the computer-aided design specification.
10. The method of clause 1, further comprising:
   calibrating a scanner that performs the electro-magnetic scan, the scanner positioned over one or more calibration blocks during the calibrating step, and the one or more calibration blocks having at least one known artificial defect.
11. A system for assessment of operational performance of a 3D manufacturing apparatus, the system comprising:
   a memory; and
   a processor in communication with the memory, wherein the system is configured to perform:
      obtaining with a scanner, in real-time during a 3D printing build process in which at least one structure is built by the 3D manufacturing apparatus, an electromagnetic scan of an area of a build platform on which the at least one structure is built, the electro-magnetic scan including at least two of an eddy current scan, an alternating current field measurement (ACFM) scan, a magnetic flux leakage (MFL) scan, and an electromagnetic acoustic transducer (EMAT) scan of the area of the build platform on which the at least one structure is built, and combining the resulting scans to obtain a fused data scan;
      evaluating, by the processor, the fused data scan; and
      determining, based on the evaluating, whether an operational flaw with the 3D manufacturing apparatus has occurred.
12. The system of clause 11, the scanner attached to a recoating blade of the 3D manufacturing apparatus.
13. The system of clause 12, further comprising:
   one or more calibration blocks that include known artificial defects configured to be scanned by the scanner, the one or more calibration blocks are located on, near or adjacent to a build section or a dispensing section.
14. The system of clause 11, the scanner located on a rotatable support configured to be lowered and raised with respect to the build platform, the scanner forming a rotational array of scanning elements, or the build platform located on a rotatable shaft.
15. The system of clause 11, the scanner locating on a support configured to be lowered and raised with respect to the build platform, the scanner forming a two-dimensional array of scanning elements.
16. The system of clause 11, the electro-magnetic scan comprising:
   an eddy current scan, and
   an alternating current field measurement (ACFM) scan or a magnetic flux leakage (MFL) scan, and
   an electromagnetic acoustic transducer (EMAT) scan.
17. The system of clause 11, wherein the operational flaw comprises a malfunction of the 3D manufacturing apparatus indicative that maintenance of the 3D manufacturing apparatus is necessary, or the operational flaw comprises a porosity indication greater than a predetermined threshold, or the operational flaw comprises a lack of fusion, a micro crack or a macro-crack in the at least one structure.
18. The system of clause 11, further comprising, responsive to determining that the operational flaw has occurred, modifying the build process, wherein the modifying disables (i) building at least a portion of a structure which is determined to exhibit the operational flaw, or (ii) building at a location of the build platform at which the operational flaw is determined to be exhibited, or (iii) modifying a 3D manufacturing apparatus operational characteristic.
19. The method of clause 18, wherein the modifying the build process includes the modifying 3D manufacturing apparatus operational characteristic step, and the operational characteristic comprises at least one of:
   laser power, laser speed, powder size, powder material, chamber temperature, laser spot size, or powder depth.
20. A computer program product for assessment of operational performance of a 3D manufacturing apparatus, the computer program product comprising:
   a non-transitory computer readable storage medium readable by a processor and storing instructions for execution by the process to perform a method comprising:
      obtaining, in real-time during a 3D printing build process in which at least one structure is built by the 3D manufacturing apparatus, an electro-magnetic scan of an area of a build platform on which the at least one structure is built, the electro-magnetic scan including at least two of an eddy current scan, an alternating current field measurement (ACFM) scan, a magnetic flux leakage (MFL) scan, and an electromagnetic acoustic transducer (EMAT) scan of the area of the build platform on which the at least one structure is built, and combining the resulting scans to obtain a fused data scan;
      evaluating, by a processor, the fused data scan; and
      determining, based on the evaluating, whether an operational flaw with the 3D manufacturing apparatus has occurred.

## Claims

1. A method (900) for inspection and assessment of 3D manufactured parts (140) and operational performance of a 3D manufacturing apparatus (100), the method (900) comprising:
obtaining (920), in real-time during a 3D printing build process in which at least one structure (140) is built by the 3D manufacturing apparatus (100), an electro-magnetic scan of an area of a build platform (112) on which the at least one structure (140) is built;
evaluating (930), by a processor (1202), the electro-magnetic scan; and
determining (950), based on the evaluating, whether an operational flaw with the 3D manufacturing apparatus (100) has occurred.

2. The method (900) of claim 1, wherein the obtaining (920) further comprises:
obtaining (921) a first scan with an eddy current scan of the area of the build platform (112) on which the at least one structure (140) is built;
obtaining (922) a second scan with at least one of an alternating current field measurement (ACFM) scan and a magnetic flux leakage (MFL) scan of the area of the build platform (112) on which the at least one structure (140) is built;
obtaining (923) a third scan with an electromagnetic acoustic transducer (EMAT) scan of the area of the build platform (112) on which the at least one structure (140) is built; and
combining (930) the first scan, the second scan and the third scan to obtain a fused data scan of the area of the build platform (112) on which the at least one structure (140) is built.

3. The method (900) of claim 1, wherein the obtaining (920) further comprises at least two of the following obtaining steps:
obtaining (921) a first scan with an eddy current scan of the area of the build platform (112) on which the at least one structure (140) is built;
obtaining (922) a second scan with at least one of an alternating current field measurement (ACFM) scan and a magnetic flux leakage (MFL) scan of the area of the build platform (112) on which the at least one structure (140) is built;
obtaining (923) a third scan with an electromagnetic acoustic transducer (EMAT) scan of the area of the build platform (112) on which the at least one structure (140) is built; and
combining (930) at least two of the first scan, the second scan or the third scan to obtain a fused data scan of the area of the build platform (112) on which the at least one structure (140) is built.

4. The method (900) of claim 1, wherein the evaluating (950) comprises performing scan processing on the obtained scan to detect an error indicative of occurrence of the operational flaw with the 3D manufacturing apparatus (100).

5. The method (900) of claim 1, wherein the operational flaw comprises a malfunction of the 3D manufacturing apparatus (100) indicative that maintenance of the 3D manufacturing apparatus (100) is necessary, or the operational flaw comprises a porosity indication greater than a predetermined threshold, or the operational flaw comprises a lack of fusion, a micro crack or a macro-crack.

6. The method (900) of claim 1, further comprising modifying a build process by modifying an operational characteristic of the 3D manufacturing apparatus (100), and the operational characteristic comprises at least one of:
laser power, laser speed, powder size, powder material, chamber temperature, laser spot size, or powder depth.

7. The method (900) of claim 1, wherein the evaluating (950) further comprises comparing one or more physical or electro-physical properties of the at least one structure (140) as it is being built during the build process to a computer-aided design specification describing one or more target properties for the at least one structure (140), and wherein the determining comprises determining, based on the comparison, whether the structure (140) being built is accurate to the computer-aided design specification.

8. The method (900) of claim 1, further comprising:
calibrating (910) a scanner (160) that performs the electro-magnetic scan, the scanner (160) positioned over one or more calibration blocks (170) during the calibrating step (910), and the one or more calibration blocks (170) having at least one known artificial defect (1401,1402,1403,1404,1405,1406).

9. A system (1200) for assessment of operational performance of a 3D manufacturing apparatus (100), the system (1200) comprising:
a memory (1204); and
a processor (1202) in communication with the memory (1204), wherein the system (1200) is configured to perform:
obtaining (920) with a scanner (160), in real-time during a 3D printing build process in which at least one structure (140) is built by the 3D manufacturing apparatus (100), an electro-magnetic scan of an area of a build platform (112) on which the at least one structure (140) is built, the electro-magnetic scan including at least two of an eddy current scan (921), an alternating current field measurement (ACFM) scan (922), a magnetic flux leakage (MFL) scan (922), and an electromagnetic acoustic transducer (EMAT) scan (923) of the area of the build platform (112) on which the at least one structure (140) is built, and combining (930) the resulting scans to obtain a fused data scan;
evaluating (930), by the processor (1202), the fused data scan; and
determining (950), based on the evaluating, whether an operational flaw with the 3D manufacturing apparatus (100) has occurred.

10. The system (1200) of claim 9, the scanner (160) attached to a recoating blade (150) of the 3D manufacturing apparatus (100).

11. The system (1200) of claim 10, further comprising:
one or more calibration blocks (170) that include known artificial defects (1401, 1402, 1403, 1404, 1405, 1406) configured to be scanned by the scanner (160), the one or more calibration blocks (170) are located on, near or adjacent to a build section (110) or a dispensing section (120).

12. The system (1200) of claim 9, the scanner (360) located on a rotatable support (362) configured to be lowered and raised with respect to the build platform (112), the scanner (360) forming a rotational array of scanning elements (361), or the build platform (112) located on a rotatable shaft (113).

13. The system (1200) of claim 9, the scanner (360) locating on a support (362) configured to be lowered and raised with respect to the build platform, the scanner (360) forming a two-dimensional array of scanning elements (361).

14. The system (1200) of claim 9, the electro-magnetic scan comprising:
an eddy current scan (921), and
an alternating current field measurement (ACFM) scan or a magnetic flux leakage (MFL) scan (922), and
an electromagnetic acoustic transducer (EMAT) scan (923).

15. The method (900) of claim 14, further comprising modifying a build process by modifying an operational characteristic of the 3D manufacturing apparatus (100), and the operational characteristic comprises at least one of:
laser power, laser speed, powder size, powder material, chamber temperature, laser spot size, or powder depth.
